# EUROPEAN PATENT APPLICATION

(11) **EP 1 760 953 A2**
(43) Date of publication of application: **07.03.2007**
(21) Application number: 05025799.7
(22) Date of filing: 25.11.2005
(51) Int. Cl.: H04L 12/437

(54) **Optical LAN terminal device and optical LAN system**

(30) Priority: 05.09.2005 JP 2005256312; 26.09.2005 JP 2005277289
(71) Applicant: Pacific Industrial Co., Ltd., Ogaki-shi, Gifu-ken 503-8603 (JP)
(72) Inventor: Okubo, Youichi, c/o Pacific Industrial Co., Ltd., Ogaki-shi, Gifu-ken 503-8603 (JP); Kawase, Shinichi, c/o Pacific Industrial Co., Ltd., Ogaki-shi, Gifu-ken 503-8603 (JP)
(74) Representative: Kramer - Barske - Schmidtchen

(57) **Abstract**

An optical LAN terminal device includes an optical input (20) connected to an external optical fiber (11) so that an optical signal is supplied via the optical fiber (11) to the input (20), an optical output (21) connected to the optical fiber (11) so that an optical signal is delivered via the optical fiber (11), a signal processor (15) receiving an optical signal and carrying out electrical signal processing for the received optical signal, thereby being capable of generating and delivering a second optical signal, a bypass (41) normally connecting the input (20) and output (21) to each other optically, a receiving branch (42) branched off from the input (20) or the bypass (41) to transmit the optical signal from the input (20) toward the signal processor (15), and a transmission branch (43) branched off from the output (21) or the bypass (41) to transmit the optical signal from the signal processor (15) toward the output (21).

## Description

The present invention relates to an optical LAN terminal device and an optical LAN system provided with a plurality of the optical LAN terminal devices connected to each other by an optical fiber.

An optical local area network (LAN) system of the loop type is well known as an optical LAN system. The optical LAN system of the loop type comprises a main control device and a plurality of optical LAN terminal devices serially connected to the main control device by an optical fiber. When the main control device delivers an optical signal, each optical LAN terminal device generates an optical signal carrying the same contents as those of a received optical signal, delivering the produced optical signal to subsequent optical LAN terminal devices. As a result, an optical signal delivered by the main control device is transmitted sequentially to a plurality of optical LAN terminal devices in a manner of bucket brigade. Each optical LAN terminal device includes a signal processor carrying out processing for a command when the received optical signal contains the command addressed to each optical LAN terminal device.

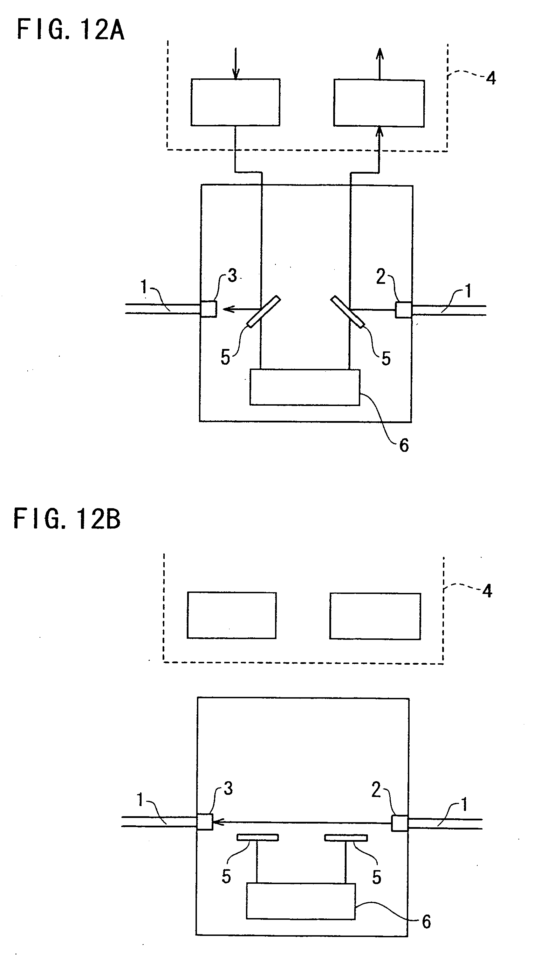

In the above-described arrangement of transmitting an optical signal in the manner of bucket brigade, an entire optical LAN system goes down when a failure occurs in at least one of the signal processors of the optical LAN terminal devices. To overcome the drawback, JP-A-H11-284647 discloses an optical LAN terminal device including two movable mirrors 5 provided between an optical input 2 and an optical output 3. This conventional arrangement is shown in FIGS. 12A and 12B of the present application. As the result of provision of the movable mirrors 5, even when a signal processor 4 goes out of order, the optical signal can be transmitted to the subsequent optical LAN terminal device. More specifically, an optical signal supplied to the optical input 2 is normally reflected on the movable mirror 5 thereby to be transmitted to the signal processor 4. The optical signal generated by the signal processor 4 is reflected on the movable mirror 5 thereby to be transmitted through the optical output 3 and an optical fiber 1 to a subsequent optical LAN terminal device, as shown in FIG. 12A. On the other hand, when the signal processor 4 goes out of order, the movable mirrors 5 are retracted from an optical path so that an optical signal passes through from the optical input 2 to the optical output 3 thereby to be transmitted from the optical output 3 and the optical fiber 1 to the subsequent optical LAN terminal device.

However, the above-noted optical LAN terminal device necessitates not only the movable mirrors 5 but supporting mechanisms and a drive mechanism 6 for the movable mirrors 5. As a result, the size of the entire device is enlarged and the cost of the device is increased. Furthermore, the conventional optical LAN terminal device has low levels of shock resistance and reliability since the device includes moving parts such as the movable mirrors 5.

Therefore, an object of the present invention is to provide an optical LAN terminal device which has a reduced size and can be manufactured at a reduced cost and can improve the shock resistance and reliability thereof, and an optical LAN system provided with a plurality of the optical LAN terminal devices.

The present invention provides an optical LAN terminal device which includes an optical input connected to an external optical fiber so that an optical signal is supplied via the external optical fiber thereto, an optical output connected to the external optical fiber so that an optical signal is delivered therefrom via the external optical fiber and a signal processor receiving an optical signal and carrying out electrical signal processing for the received optical signal, thereby being capable of generating and delivering a second optical signal, characterized by a bypass normally connecting the optical input and output to each other optically; a receiving branch branched off from the optical input or the bypass to transmit the optical signal from the optical input toward the signal processor; and a transmission branch branched off from the optical output or the bypass to transmit the optical signal from the signal processor toward the optical output.

The optical signal taken from the external optical fiber into the optical input is branched off into the bypass and the receiving branch. The optical signal branched into the receiving branch is received by the signal processor, where predetermined signal processing is carried out for the received optical signal, whereupon an optical signal is delivered by the signal processor. The delivered optical signal is further delivered from the transmission branch through the optical output to the external optical fiber. On the other hand, the optical signal branched into the bypass passes over to the optical output, where the optical signal is delivered to the external optical fiber. Since the bypass normally connects the optical input and the optical output to each other optically, the optical signal taken into the optical LAN terminal device is reliably transmitted outward through the optical LAN terminal device irrespective of an abnormal condition of the signal processor. Moreover, since no movable components such as the conventionally employed movable mirror are used in the optical LAN terminal device, the shock resistance and reliability of the optical LAN terminal device can be improved. Furthermore, since the number of components of the device is reduced, reductions in the size and cost of the device can be achieved.

The invention also provides an optical LAN system which includes a main control device, an optical fiber having both ends connected to the main control device into a loop shape, and a plurality of optical LAN terminal devices serially connected by the loop-shaped optical fiber so as to sequentially receive an optical signal delivered by the main control device.

Thus, the above-described optical LAN terminal device can be used in the optical LAN system of the loop type in which a plurality of the optical LAN terminal devices are serially connected to the main control device by the optical fiber into the loop. Even when the signal processor of at least one of the optical LAN terminal devices goes out of order in the optical LAN system of the loop type, the optical signal delivered by the main control device reliably passes through the bypass of the optical LAN terminal device which is out of order thereby to be transmitted to the subsequent optical LAN terminal device. Consequently, the entire optical LAN system can be prevented from going down. Furthermore, a break in an optical path including the optical fiber can be detected depending upon whether an optical signal returns to the main control device through the optical LAN terminal devices.

In a preferred embodiment, the signal processor is configured so as to generate an optical signal carrying the same information as the optical signal received through the receiving branch, delivering the generated signal to the transmission branch at a predetermined timing. When optical intensity is reduced while an optical signal is passing through the external optical fiber, the signal processor of each optical LAN terminal device generates an optical signal carrying the same information as the passing optical signal. The generated optical signal whose optical intensity is rendered higher than that of the received optical signal is transmitted to the subsequent optical LAN terminal device. Consequently, a stable optical communication can be carried out.

The invention will be described, merely by way of example, with reference to the accompanying drawings, in which:
FIG. 1 is a conceptual illustration of an optical LAN system of a first embodiment according to the present invention;
FIGS. 2A and 2B are conceptual illustrations of an optical LAN terminal device and a main control device respectively;
FIGS. 3A and 3B are a side section and a front section of a branch light-transmitting member respectively;
FIG. 4 is a conceptual illustration of transmitted data;
FIG. 5 is a timing chart showing an output timing of an optical signal during a normal condition of a plurality of optical LAN terminal devices in the optical LAN system of a second embodiment according to the invention;
FIG. 6 is a timing chart showing an output timing of an optical signal during an abnormal condition;
FIG. 7 is a conceptual illustration of an optical LAN terminal device of a third embodiment according to the invention;
FIG. 8 is a sectional view of light-transmissible wire bundle taken along line A-A in FIG. 7;
FIGS. 9A and 9B are a side section of a modified form of the branch light-transmitting member and a side section of another modified form of the branch light-transmitting member;
FIG. 10 is a side section of further another modified form of the branch light-transmitting member;
FIG. 11 is a sectional view of a modified form of the light-transmissible wire bundle; and
FIGS. 12A and 12B are conceptual illustrations of a conventional optical LAN terminal device in a normal condition and in an abnormal condition.

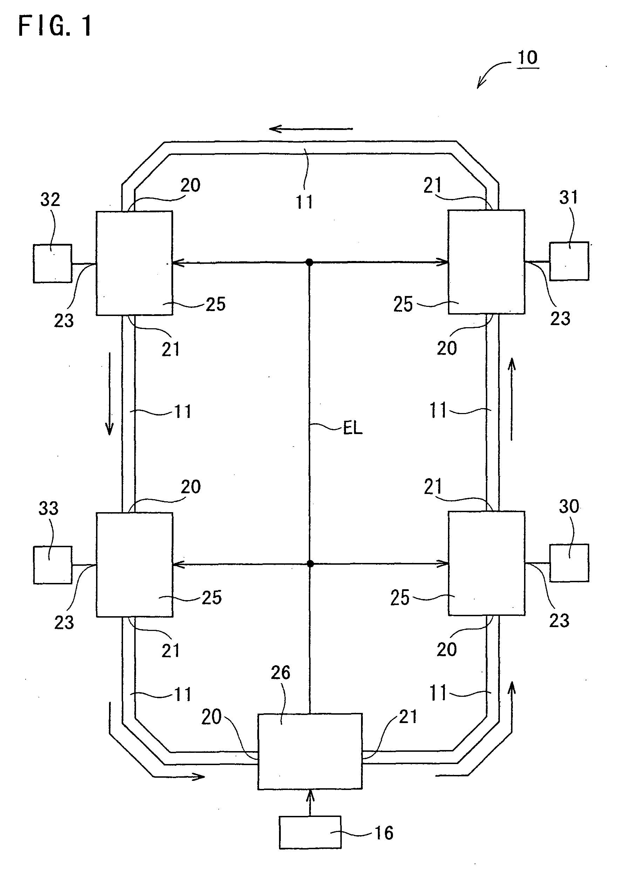

An embodiment of the present invention will be described with reference to FIGS. 1 to 4. Referring to FIG. 1, an optical LAN system 10 of the embodiment is shown. The system 10 is a vehicle-installed LAN which is installed in a vehicle. The optical LAN system 10 comprises a main control device 26 and a plurality of, for example, four, optical LAN terminal devices 25 connected to the main control device 26 by an optical fiber 11.

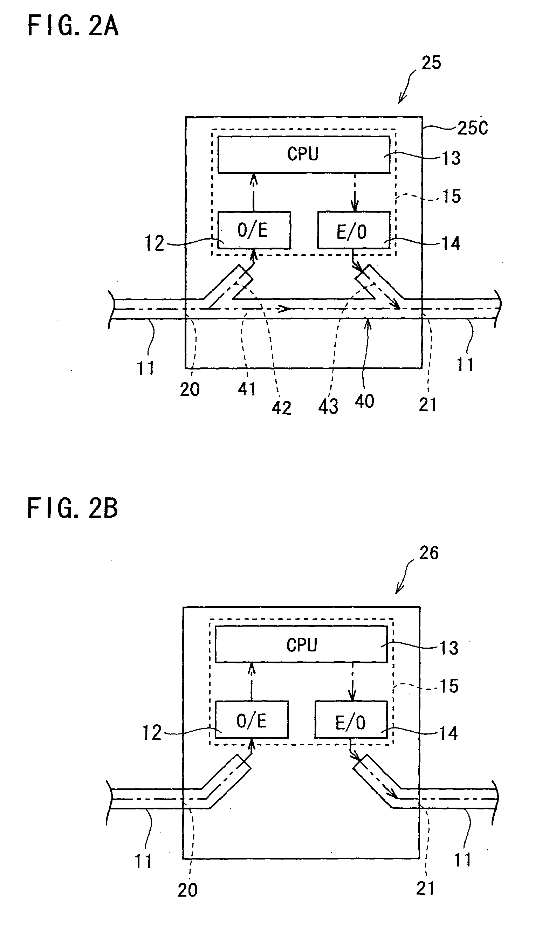

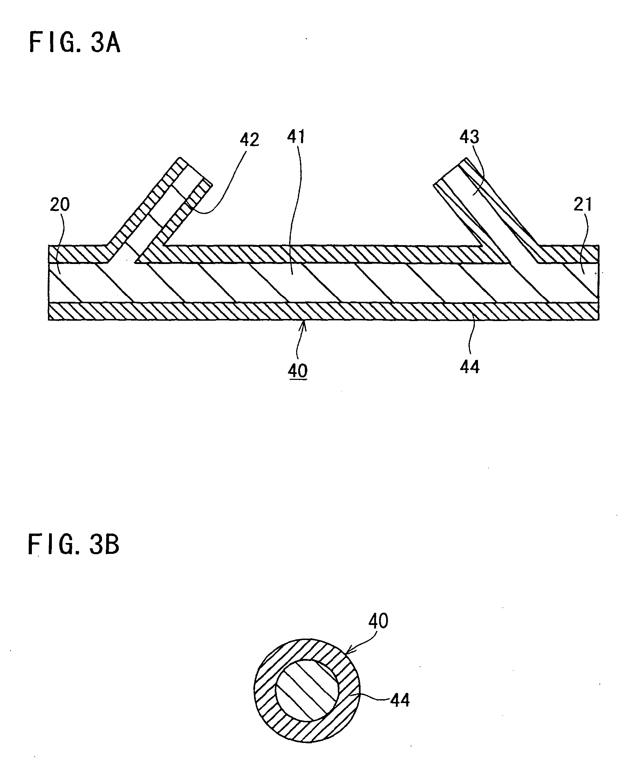

Referring now to FIG. 2A, each optical LAN terminal device 25 includes a branch light-transmitting member 40. As shown in an enlarged view of FIG. 3A, the branch light-transmitting member 40 includes a linear extending bypass 41 having a receiving branch 42 and a transmission branch 43. The linear extending bypass 41 has both axial ends thereof. The receiving and transmission branches 42 and 43 extend obliquely from portions of the bypass 41 near the axial ends toward an axial middle of the bypass respectively. Furthermore, the branch light-transmitting member 40 is made of a light-transmissible resin by integral molding. An entire outer surface of the branch light-transmitting member 40 is covered with a light reflecting member 44 as shown in FIG. 3B.

The bypass 41 of the branch light-transmitting member 40 has both ends serving as an optical input 20 and an optical output 21 respectively. The ends of the bypass 41 are exposed at both end faces of a casing 25C of the optical LAN terminal device 25 so as to be connectable to the optical fiber 11, respectively, as shown in FIG. 2A. When taken from the optical input 20 into the optical LAN terminal device 25, an optical signal branches off into the bypass 41 and the receiving branch 42. The optical signal branched into the bypass 41 is transmitted through the optical output 21 to the external optical fiber 11.

The receiving branch 42 and the transmission branch 43 extend from the same side of the bypass 41 so as to come close to each other. The receiving branch 42 and the transmission branch 43 have respective distal ends connected to a signal processor 15. More specifically, the signal processor 15 includes an opto-electric transducer 12 and an electro-optical transducer 14 both of which are electrically connected to a central processing unit (CPU) 13. The opto-electric transducer 12 is disposed so as to be opposed to an end face of the receiving branch 42. Alternatively, the opto-electric transducer 12 may optically be connected via a light-transmitting member (not shown) to the receiving branch 42. Similarly, the electro-optical transducer 14 is disposed so as to be opposed to an end face of the transmission branch 43. Alternatively, the electro-optical transducer 14 may optically be connected via a light-transmitting member (not shown) to the receiving branch 43. An optical signal delivered from the optical input 20 to the receiving branch 42 side is converted to an electrical signal by the opto-electric transducer 12. The electrical signal is then taken into the CPU 13, which carries out predetermined processing, generating another electrical signal. The electrical signal generated by the CPU 13 is converted by the electro-optical transducer 14 to an optical signal, which is delivered to the transmission branch 43. The optical signal is then delivered to the external optical fiber 11 through the transmission branch 43 and the optical output 21. The signal processor 15 includes a read only memory (ROM) storing various programs and a random access memory (RAM) temporarily storing data.

Each optical LAN terminal device 25 includes an electrical connector 23 to which electrical equipment is to be connected. For example, tail lamps 30 are connected to the electrical connector 23 of the first optical LAN terminal device 25. A wiper motor 31 is connected to the electrical connector 23 of the second optical LAN terminal device 25. A door switch 32 is connected to the electrical connector 23 of the third optical LAN terminal device 25 for detecting an open or closed state of vehicle doors. A seat belt switch 33 is connected to the electrical connector 23 of the fourth optical LAN terminal device 25 for detecting a wearing state of seat belt (not shown). The above-noted tail lamps 30 and wiper motor 31 each serve as an electrically driving member in the present invention, whereas the door switch 32 and seat belt switch 33 each serve as a driven member in the present invention. Specific addresses are assigned to the optical LAN terminal devices 25 so that the first to fourth optical terminal devices are discriminated from one another. The electrically driving member should not be limited to the above-noted components but may include an air conditioner, car audio system, power-window motor, door-mirror motor etc.

The main control device 26 includes an optical input 20, an optical output 21 and a signal processor 15 as each optical LAN terminal device 25 does, as shown in FIG. 2B. However, the main control device 26 differs from each optical LAN terminal device 25 in that the optical input 20 and the optical output 21 are optically disconnected from each other. Furthermore, a vehicle control device 16 is connected to the main control device 26.

The optical LAN system 10 includes the first to fourth optical LAN terminal devices 25 series connected via the optical fiber 11 to the main control device 26 so that the optical LAN terminal devices 25, optical fiber 11 and main control device 26 are formed into a loop. More specifically, the optical output 21 of the main control device 26 is connected via the optical fiber 11 to the optical input 20 of the first optical LAN terminal device 25 to which the tail lamps 30 are to be connected. The optical output 21 of the first optical LAN terminal device 25 is connected via the optical fiber 11 to the optical input 20 of the second optical LAN terminal device 25 to which the wiper motor 31 is to be connected. Furthermore, the optical output 21 of the second optical LAN terminal device 25 is connected via the optical fiber 11 to the optical input 20 of the third optical LAN terminal device 25 to which the door switch 32 is to be connected. The optical output 21 of the third optical LAN terminal device 25 is connected via the optical fiber 11 to the optical input 20 of the fourth optical LAN terminal device 25 to which the seat-belt switch 33 is to be connected. The optical output 21 of the fourth optical LAN terminal device 25 is connected via the optical fiber 11 to the optical input 20 of the main control device 26. Consequently, the main control device 26 and optical LAN terminal devices 25 are connected via the optical fiber 11 into a loop so that an optical signal is transmitted sequentially in one of two rotational directions along the loop.

The first to fourth optical LAN terminal devices 25 are also connected via electrical power line EL to the main control device 26 as shown in FIG. 1. When a power switch (not shown) is turned on, an external power supply (not shown) supplies electric power to the main control device 26, which is then activated. The electric power is further supplied from the main control device 26 via the EL line to the optical LAN terminal devices 25.

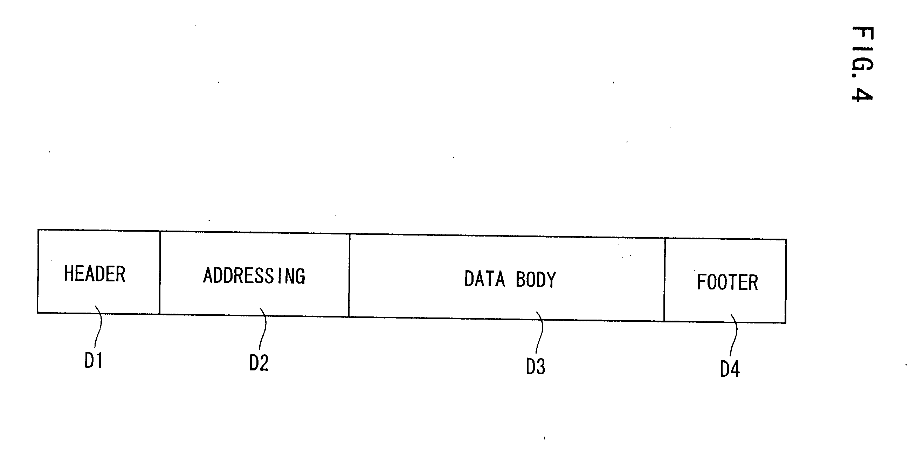

The optical LAN system 10 configured above will operate as follow. For example, when a driver of a vehicle provided with the optical LAN system 10 turns on an operation switch of the wiper, the vehicle control device 16 obtains information about the operation, delivering a wiper actuation command to the main control device 26. The main control device 26 then generates transmission data containing the address of the second optical LAN terminal device 25 connected to the wiper motor 31 and a command to start the wiper motor 31. The transmission data is composed of a header D1 indicative of data head, an addressing D2 including the address, data body D3 including the command and other information and a footer D4 indicative of data end all arranged in this sequence as shown in conceptual illustration of serial data in Fig. 4. In order that the wiper may be actuated, the address of the second optical LAN terminal device 25 is included in the addressing D2 and a command to start the wiper motor 31 is included in the data body D3. The main control device 26 controls the electro-optical transducer 14 so that the electrical transmission data is converted to an optical signal, delivering the optical signal via the optical fiber 11 to the optical LAN terminal devices 25.

The optical signal is firstly taken into the optical input 20 of the first optical LAN terminal device 25. The optical signal travels bifurcately both into the bypass 41 and into the receiving branch 42. The optical signal traveling into the bypass 41 passes from the optical input 20 to the optical output 21, further traveling from the optical output 21 via the optical fiber 11 to the second optical LAN terminal device 25. Regarding each of the second to fourth optical LAN terminal devices 25, the optical signal traveling into the bypass 41 also passes from the optical input 20 to the optical output 20 in the same manner as described above. The optical signal further travels from the optical output 21 of the fourth optical LAN terminal device 25 via the optical fiber 11 to the main control device 26. Thus, the first to fourth optical LAN terminal devices 25 can receive the optical signal delivered from the main control device 26. Furthermore, the main control device 26 can receive the optical signal delivered from itself depending upon an entire length of the optical LAN system.

In each optical LAN terminal device 25, the optical signal having traveled through the receiving branch 42 is converted by the opto-electric transducer 12 of the signal processor 15 to an electrical signal, which is taken into the CPU 13. The CPU 13 determines whether the address contained in the addressing D2 of the received transmission data corresponds with the address assigned to itself. When an optical signal for actuating the wiper has been transmitted from the main control device 26 as described above, the CPU 13 of the second optical LAN terminal device 25 determines that the address contained in the addressing D2 corresponds with the address assigned to itself, driving the wiper motor 31 in compliance with the command contained in the data body D3, whereupon the wiper is actuated.

On the other hand, each of the optical LAN terminal devices 25 except the second optical LAN terminal device 25 determines that the address contained in the addressing D2 does not correspond with the address assigned to itself, being on standby for a subsequent optical signal. Furthermore, the CPU 13 of the second optical LAN terminal device 25 generates, as an electrical signal, transmission data containing information that the wiper motor 31 was normally driven. More specifically, the specific address of the main control device 26 is contained in the addressing D2 of the transmission data. Information that processing was normally executed is contained in the data body D3 of the transmission data. The generated transmission data is converted by the electro-optical transducer 14 into an optical signal, which is then delivered outward from the optical output 21. Each subsequent optical LAN terminal device 25 consults the addressing D2, ignoring the optical signal. The main control device 26 receives the optical signal thereby to confirm that the wiper motor 31 was normally driven. Processing for the operation of tail lamps 30 is carried out in the same manner as described above.

The main control device 26 generates transmission data (see FIG. 4) as an electrical signal at predetermined intervals, for example. The transmission data is used for confirming an on-off state of the door switch 32. The transmission data is delivered to the third optical LAN terminal device 25. More specifically, in the same manner as the command to actuate the wiper, the specific address of the third optical LAN terminal device 25 is contained in the addressing D2. Transmission data containing a command to confirm an on-off state of the door switch 32 is generated in the data body D3. The transmission data is then converted to an optical signal. Only the CPU 13 of the third optical LAN terminal device 25 responds to the optical signal, confirming the on-off sate of the door switch 32. The CPU 13 then generates transmission data containing information about whether the door switch 32 is turned on or off, delivering the data to the main control device 26. The main control device 26 receives the transmission data and transmits the received data to the vehicle control device 16. The vehicle control device 16 then turns on a predetermined warning lamp. Processing for confirmation of the on-off state of seat belt switch 33 is carried out in the same manner as described above.

When something is wrong with one of the signal processors 15 of the first to fourth optical LAN terminal devices 25, the optical LAN terminal device 25 to which the wrong signal processor 15 belongs cannot transmit an optical signal which is responsive to a command from the main control device 26. However, the bypass 41 provided in each optical LAN terminal device 25 maintains continuous optical connections between the optical input 20 and output 21 of each terminal device. Accordingly, the optical signal delivered from the main control device 26 or each of the normal optical LAN terminal devices 25 reliably travels through the bypasses 41 of the respective optical LAN terminal devices 25 thereby to be transmitted to the subsequent terminal devices irrespective of the abnormal condition of the signal processor 15 of one of the optical LAN terminal devices 25. Consequently, the whole optical LAN system 10 can be prevented from going down.

In other words, each optical LAN terminal device 25 in the embodiment is provided with a signal processor route along which the signal travels by way of the signal processor 15 and a bypass route along which the signal travels by way of the bypass 41. Accordingly, even when the signal processor route including the signal processor 15 is under abnormal conditions, the optical LAN system 10 can be prevented from going down. Since the bypass 41 constituting the bypass route maintains continuous optical connections between the optical input 20 and output 21 of each terminal device, the shock resistance and reliability of the terminal device can be improved as compared with the conventional configuration including a moving member such as a movable mirror. Furthermore, since the number of components is reduced, the weight, size and costs of the optical LAN terminal device can be reduced.

Additionally, each optical LAN terminal device 25 includes the branch light-transmitting member 40 further including the optical input 20, the optical output 21, the bypass 41 and the receiving branch 42 and the transmission branch 43 all integrally molded from the light-transmissible resin. Consequently, the number of components can be reduced as compared with the case where the optical input 20, the bypass 41 and the like are composed into individual components. Furthermore, since the outer surface of the integrally-molded component is covered with the light-reflecting member 44, the optical signal can be prevented from leaking outside the branch light-transmitting member 40.

When the main control device 26 receives no response after having delivered a command to a specific one of the optical LAN terminal devices 25, the optical LAN terminal device 25 which is under abnormal conditions can be detected. Furthermore, a break in an optical path including the optical fibers 11 can be detected based on whether a signal has returned to the main control device 26, having passed through the optical LAN terminal devices 25.

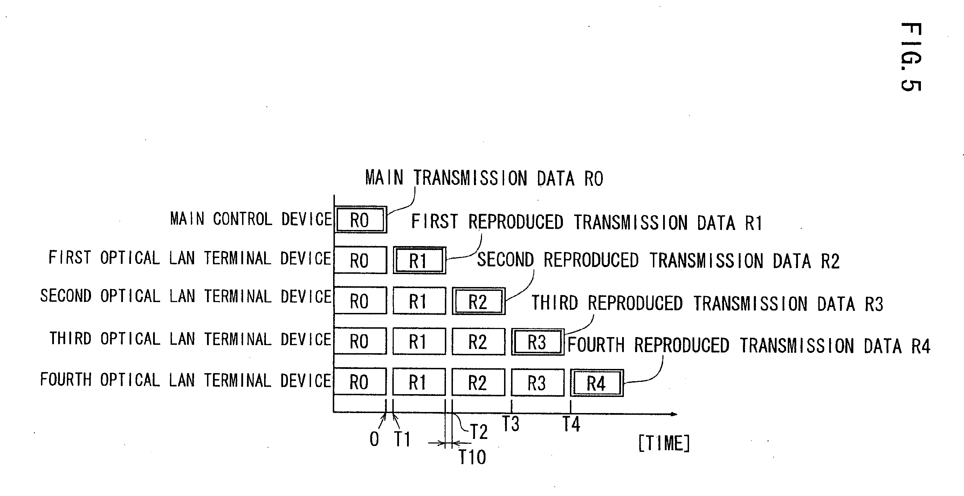

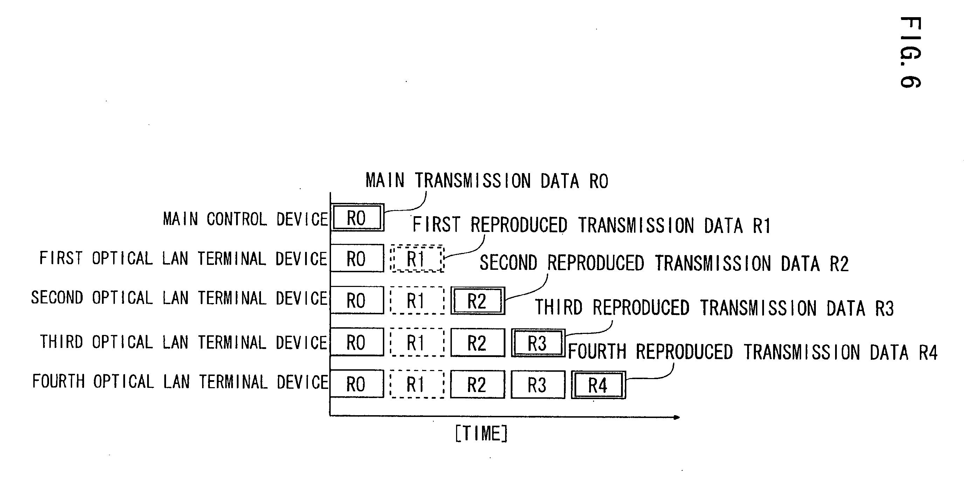

FIGS. 5 and 6 illustrate a second embodiment of the invention. The second embodiment differs in communications protocol from the first embodiment. The other arrangement of the second embodiment is the same as the arrangement of the first embodiment and accordingly, only the difference of the second embodiment from the first embodiment will be described. The CPU 13 of each optical LAN terminal device 25 computes a standby time based on the number of the other optical LAN terminal devices 25 between the main control device 26 and itself. Furthermore, the CPU 13 of each optical LAN terminal device 25 reproduces transmission data received as an optical signal to generate transmission data including data body D3 (see FIG. 4) containing the specific address thereof. The CPU 13 of each optical LAN terminal device 25 delivers, as an optical signal, reproduced transmission data after a lapse of a predetermined time from receipt of an optical signal from the main control device 26.

More specifically, as shown in the time chart of FIG. 5, when the main control device 26 delivers main transmission data R0 in the form of an optical signal, the first optical LAN terminal device 25 receives the main transmission data R0 and then generates first reproduced transmission data R1 which carries the same contents as the main transmission data R0 and further contains information the first optical LAN terminal device 25 has generated in the data body D3. After a lapse of a predetermined standby time T1 from receipt of the main transmission data R0, the first optical LAN terminal device 25 delivers, as an optical signal, the first reproduced transmission data R1 to the second optical LAN terminal device 25.

The second optical LAN terminal device 25 then receives the first reproduced transmission data R1 after having received the main transmission data R0 having passed through the bypass 41 of the first optical LAN terminal device 25. On the other hand, the CPU 13 of the second optical LAN terminal device 25 generates second reproduced transmission data R2 which carries the same contents as the main transmission data R0 from the main control device 26 and further contains information the second optical LAN terminal device 25 has generated in the data body D3. After a lapse of a predetermined standby time T2 from receipt of the main transmission data R0, the second optical LAN terminal device 25 delivers, as an optical signal, the second reproduced transmission data R2 to the third optical LAN terminal device 25. As a result, the second reproduced transmission data R2 is transmitted to the third optical LAN terminal device 25 after a predetermined time T10 from transmission of the first reproduced transmission data R1.

The CPU 13 of the third optical LAN terminal device 25 receives the second reproduced transmission data R2 after having received the main transmission data R0 having passed over through the bypass 41 of the second optical LAN terminal device 25 and the first reproduced transmission data R1. As in the above-described case of the second optical LAN terminal device 25, the third optical LAN terminal device 25 generates third reproduced transmission data R3, which is converted to an optical signal to be delivered to the fourth optical LAN terminal device 25. Furthermore, in the same manner, the fourth optical LAN terminal device 25 receives the third reproduced transmission data R3 after having received the main transmission data R0 having passed through the bypass 41 of the third optical LAN terminal device 25 and the first and second reproduced transmission data R1 and R2. The fourth optical LAN terminal device 25 then generates fourth reproduced transmission data R4, which is converted to an optical signal to be delivered to the main control device 26.

Furthermore, the signal processor 15 of each optical LAN terminal device 25 carries out a predetermined process when the received main transmission data R0 contains a command directed to itself. In this case, the third optical LAN terminal device 25 which is spaced relatively farther away from the main control device 26 compares the first and second reproduced transmission data R1 and R2 with the received main transmission data R0 to determine whether each reproduced transmission data corresponds with the main transmission data R0. Additionally, the fourth optical LAN terminal device 25 also compares each of the first to third reproduced transmission data R1 to R3 with the received main transmission data R0. The fourth optical LAN terminal device 25 employs one of the first to third reproduced transmission data R1 to R3 having the highest degree of correspondence with the main transmission data R0, thereby carrying out processing. Furthermore, when each one of the first to third reproduced transmission data R1 to R3 does not correspond with each of the other two, the fourth optical LAN terminal device 25 carries out processing based on the reproduced transmission data delivered from the nearest optical LAN terminal device 25.

According to the above-described configuration, when receiving an optional signal with a reduced optical intensity, the signal processor 15 of each optical LAN terminal device 25 can generate another optical signal carrying the same contents as the received optical signal and having an increased optical intensity, delivering the optical signal to the subsequent optical LAN terminal device 25. Consequently, a stable optical transmission can be carried out. Furthermore, when something is wrong with the signal processor 15 of the first optical LAN terminal device 25, for example, as shown in FIG. 6, the second to fourth optical LAN terminal devices 25 cannot receive the first reproduced transmission data R1 delivered from the first optical LAN terminal device 25. Furthermore, it is possible that the optical signal indicative of the main transmission data R0 delivered from the main control device 26 may have an excessively low optical intensity. However, the second optical LAN terminal device 25 receives the main transmission data R0 before the optical intensity of the optical signal indicative of the main transmission data R0 is reduced, delivering the second reproduced transmission data R2 carrying the same contents as the main transmission data R0. Consequently, although located relatively farther away from the main control device 26, each of the third and fourth optical LAN terminal devices 25 can execute processing based on the second reproduced transmission data R2. Additionally, the main control device 26 can detect a failure in the signal processor 15 of any one of the optical LAN terminal devices 25.

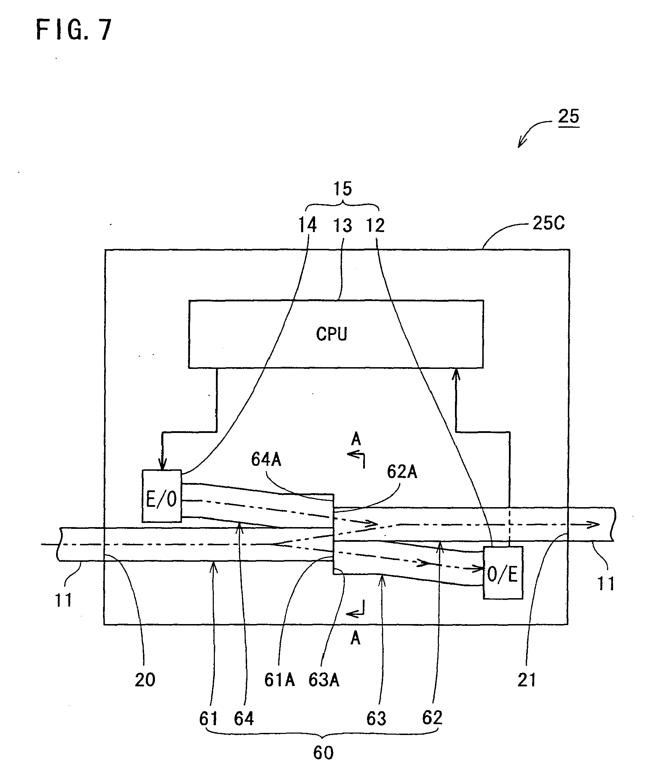

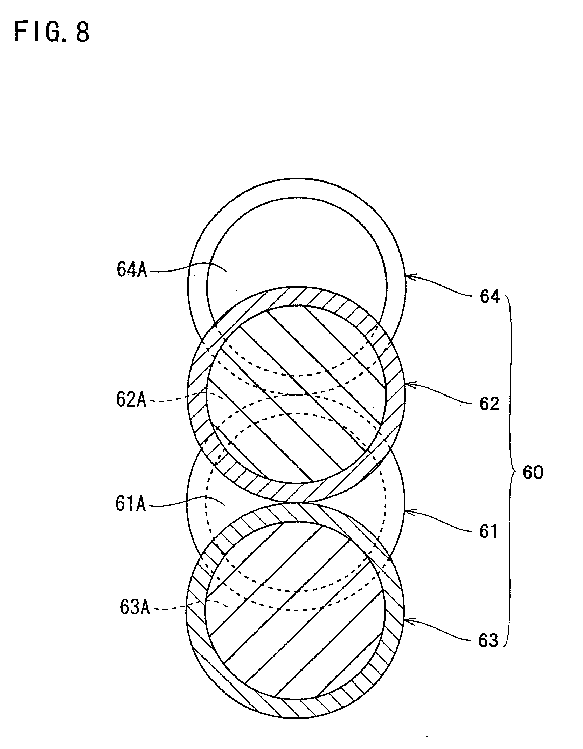

FIGS. 7 and 8 illustrate a third embodiment of the invention. In the third embodiment, each optical LAN terminal device 25 is provided with a light-transmitting wire bundle 60, instead of the branch light-transmitting member 40 in the first embodiment. Identical or similar parts are labeled by the same reference symbols as those in the first embodiment and the description of these parts will be eliminated. Only the differences of the third embodiment from the first embodiment will be described.

Referring to FIG. 7, the light-transmitting wire bundle 60 comprises first to fourth optical fibers 61 to 64. A first optical fiber 61 serves as a first light-transmissible resin wire in the invention and has an end serving as the optical input 20, which is connected to the external optical fiber 11. A second optical fiber 62 serves as a second light-transmissible resin wire in the invention and has an end serving as the optical output 21, which is connected to the external optical fiber 11. A third optical fiber 63 serves as a third light-transmissible resin wire and the receiving branch in the invention and has an end connected to the signal processor 15. More specifically, the end of the third optical fiber 63 is connected to the opto-electric transducer 12 of the signal processor 15. The opto-electric transducer 12 is in turn connected to the CPU 13 of the signal processor 15. A fourth optical fiber 64 serves as a fourth light-transmissible resin wire and the transmission branch in the invention and has an end connected to the signal processor 15. More specifically, the end of the fourth optical fiber 64 is connected to the electro-optical transducer 14 of the signal processor 15. The electro-optical transducer 14 is in turn connected to the CPU 13 of the signal processor 15.

The optical fibers 61 to 64 are divided into two pairs, that is, a pair of first and fourth optical fibers 61 and 64, and a pair of second and third optical fibers 62 and 63. The first and fourth optical fibers 61 and 64 have the other ends which are opposed to the optical input 20 and the signal processor 15, respectively. These ends of the first and fourth optical fibers 61 and 64 are bundled together. The second and third optical fibers 62 and 63 have the other ends which are opposed to the optical output 21 and the signal processor 15, respectively. These ends of the second and third optical fibers 62 and 63 are bundled together. The first and fourth optical fibers 61 and 64 have bundled side end faces 61A and 64A respectively. The second and third optical fibers 62 and 63 also have bundled side end faces 62A and 63A respectively. The end faces 61A and 64A and the end faces 62A and 63A are butt-joined with each other while being shifted from each other. More specifically, as shown in FIG. 8, the four optical fibers 61 to 64 have the same diameter, and the end faces 61A and 64A and the end faces 62A and 63A are butt-joined with each other while being shifted at a distance equal to a radius of the fibers. The end face 61A of the first optical fiber 61 is joined with the end faces 62A and 63A of the second and third optical fibers 62 and 63 so as to straddle the fibers 62 and 63. The end face 62A of the second optical fiber 62 is joined with the end faces 61A and 64A of the first and fourth optical fibers 61 and 64 so as to straddle the fibers 61 and 64.

According to the third embodiment, an optical signal supplied into the optical input 20 at one end of the first optical fiber 61 travels bifurcately into the second and third optical fibers 62 and 63. The optical signal having traveled into the third optical fiber 63 is received and processed by the signal processor 15, so that an optical signal is delivered. After traveling from the fourth optical fiber 64 into the second optical fiber 62, the optical signal is delivered through the optical output 21 provided on one end of the second optical fiber 62 into the external optical fiber 11. On the other hand, the optical signal having traveled from the first optical fiber 61 into the second optical fiber 62 passes through the second optical fiber 62, traveling to the output 21 provided on one end of the second optical fiber 62. The optical signal is then delivered from the output 21 into the external optical fiber 11. Thus, the first and second optical fibers 61 and 62 constitute the bypass in the invention, whereupon the third embodiment can achieve the same effect as the first embodiment. Furthermore, since the light-transmitting wire bundle 60 is composed of the general purpose optical fibers 61 to 64, the production cost can be reduced. Furthermore, the first to fourth optical fibers 61 to 64 has the same diameter, and the end faces 61A and 64A of the first and fourth optical fibers 61 and 64 are butt-joined with the end faces 62A and 63A of the second and third optical fibers 62 and 63 so as to be shifted from the end faces 62A and 63A. Consequently, an optical signal can be distributed to a signal processing route via which an optical signal reaches the signal processor 15 and a bypass route via which an optical signal passes through the signal processor 15 with uniform optical intensity.

The light-transmitting wire bundle 60 may comprise four bar-shaped members, instead of the optical fibers 61 to 64. In this case, each bar-shaped member is made of a light-transmissible resin by injection molding, and an overall outer surface of each bar-shaped member is covered with a light-reflecting member.

The invention should not be limited by the foregoing embodiments and encompasses the following modified forms, for example. Furthermore, the invention can be modified without departing from the scope thereof.

The invention is applied to the optical LAN system 10 installed in a vehicle in the foregoing embodiments. However, the invention may be applied to a LAN system installed in a house, office, factory or the like.

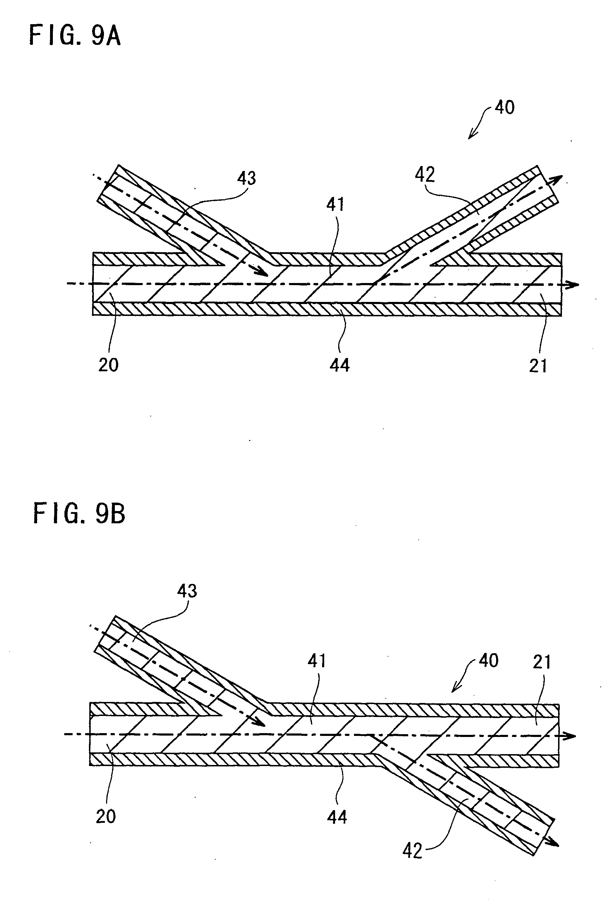

The receiving branch 42 of the branch light-transmitting member 40 may obliquely extend from the central part of the bypass 41 toward the optical output 21 side, whereas the transmission branch 43 of the branch light-transmitting member 40 may obliquely extend toward the optical input 20 side, as shown in FIG. 9A. In this case, the receiving and transmission branches 42 and 43 may be disposed on the same side of the bypass 41, on the upper side, as shown in FIG. 9A or may be disposed so as to be opposed to each other in a 180-degree spaced-apart relation with respect to the outer periphery of the bypass 41 as shown in FIG. 9B.

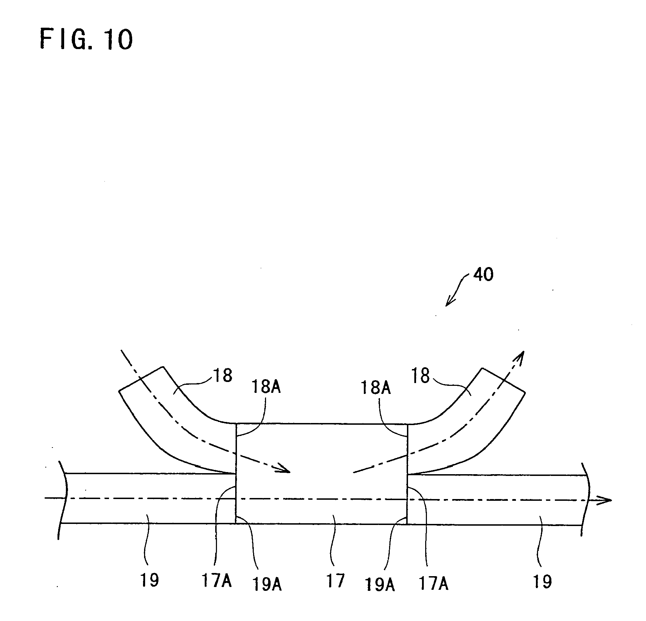

An end face 17A of an optical fiber 17 having a relatively larger diameter may be butt-joined with end faces 18A and 19A of paired optical fibers 18 and 19 having respective diameters which are about one half of the diameter of the optical fiber 17 as shown in FIG. 10. Furthermore, the other end face 17A of the optical fiber 17 may be butt-joined with the other end faces 18A and 19A of the paired optical fibers 18 and 19, whereby the branch light-transmitting member 40 may be configured. In this case, the bypass in the invention is constituted by a pair of coaxially disposed optical fibers 19 and a part of the optical fiber 17. The transmission branch 43 is constituted by one of the optical fibers 18. The receiving branch 42 is constituted by the other optical fiber 18.

In each of the foregoing embodiments, the branch light-transmitting member 40 and the optical fiber 11 are separate from each other in each optical LAN terminal device 25. However, the branch light-transmitting member 40 and the optical fiber 11 may be integral with each other, instead.

The optical LAN system 10 includes four optical LAN terminal devices 25 in each embodiment. However, the optical LAN system 10 may include a plurality of optical LAN terminal devices 25 other than four. Furthermore, the last or fourth optical LAN terminal device 25 may be disconnected from the main control device 26 in each embodiment.

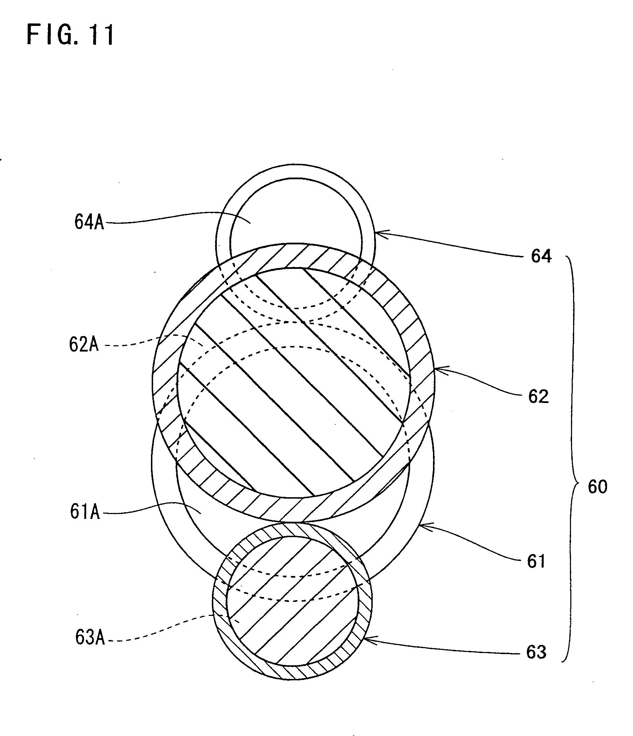

The optical LAN terminal device 25 may be used in a star-connected optical LAN system in which a plurality of optical LAN terminal devices are connected in parallel to the main control device by the optical fiber. In this case, too, disconnection of the optical path including the optical fibers can be detected depending upon whether a signal has returned through the optical LAN terminal devices to the main control device. The first to fourth optical fibers 61 to 64 constituting the light-transmitting wire bundle 60 have the same diameter in the third embodiment. These optical fibers 61 to 64 may have diameters different from one another. More specifically, the first and second optical fibers 61 and 62 may have larger diameters than the third and fourth optical fibers 63 and 64. A joint area of the end faces 61A and 62A of the first and second optical fibers 61 and 62 may be larger than a joint area of the end faces 61A and 63A of the first and third optical fibers 61 and 63 and a joint area of the end faces 62A and 64A of the second and fourth optical fibers 62 and 64. Consequently, the optical intensity of the optical signal traveling into the bypass route can be rendered higher than the optical intensity of the optical signal traveling into the signal processing route. The light-transmitting wire bundle 60 as exemplified in FIG. 11 includes the first and second optical fibers 61 and 62 having the same relatively larger diameter and the third and fourth optical fibers 63 and 64 having the same relatively smaller diameter. Furthermore, the relationship of diameters of the first to fourth optical fibers 61 to 64 should not be limited to those in the third embodiment and the above-described modified form. For example, the first to fourth optical fibers 61 to 64 may have diameters different from one another or at least two of the optical fibers 61 to 64 may have the same diameter.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An optical LAN terminal device which includes an optical input (20) connected to an external optical fiber (11) so that an optical signal is supplied via the external optical fiber (11) thereto, an optical output (21) connected to the external optical fiber (11) so that an optical signal is delivered therefrom via the external optical fiber (11) and a signal processor (15) receiving an optical signal and carrying out electrical signal processing for the received optical signal, thereby being capable of generating and delivering a second optical signal,
**characterized by**
a bypass (41; 61, 62) normally connecting the optical input and output (20; 21) to each other optically,
a receiving branch (42; 63) branched off from the optical input (20) or the bypass (41; 61, 62) to transmit the optical signal from the optical input (20) toward the signal processor (15), and
a transmission branch (43; 64) branched off from the optical output (21) or the bypass (41; 61, 62) to transmit the optical signal from the signal processor (15) toward the optical output (21).

2. The optical LAN terminal device according to claim 1, further **characterized by** a branch light-transmitting member (40) including the optical input (20), the optical output (21), the bypass (41), the receiving branch (42) and the transmission branch (43) all integrally formed using a light transmitting resin, and a light reflecting member (44) covering an outer surface of the branch light-transmitting member (40).

3. The optical LAN terminal device according to claim 1 or 2, **characterized in that**
a branch light-transmitting member (40) includes the bypass (41),
the bypass (41) extends linearly and has both ends serving as the optical input (20) and the optical output (21) respectively,
the receiving branch (42) extends obliquely from a central part of the bypass (41) toward the optical output (21), and
the transmission branch (43) extends obliquely from the central part of the bypass (41) toward the optical input (20).

4. The optical LAN terminal device according to claim 1, further **characterized by**
a first light-transmissible resin wire (61) having one of two ends provided with the optical input (20),
a second light-transmissible resin wire (62) having one of two ends provided with the optical output (21),
a third light-transmissible resin wire (63) having one of two ends connected to the signal processor (15) thereby to constitute the receiving branch,
a fourth light-transmissible resin wire (64) having one of two ends connected to the signal processor (15) thereby to constitute the transmission branch, and
a light-transmitting wire bundle (60) including a first pair of the other end of the first light-transmissible resin wire (61) located opposite the optical input (20) and the other end of the fourth light-transmissible resin wire (64) located opposite the signal processor (15), said other ends of the first and fourth light-transmissible resin wires (61; 64) being bundled, the light-transmitting wire bundle (60) further including a second pair of the other end of the second light-transmissible resin wire (62) located opposite the optical output (21) and the other end of the third light-transmissible resin wire (63) located opposite the signal processor (15), said other ends of the second and third light-transmissible resin wires (62; 63) being bundled, the first to fourth light-transmissible resin wires (61 to 64) having respective end faces (61A, 62A, 63A and 64A), the end faces (61A; 64A) of the first and fourth light-transmissible resin wires (61 to 64) and the end faces (62A, 63A) of the second and third light-transmissible resin wires (62, 63) being butt-joined with each other with a shift so that the end face (61A) of the first light-transmissible resin wire (61) is joined with the end faces (62A, 63A) of the second and third light-transmissible resin wires (62, 63) and so that the end face (62A) of the second light-transmissible resin wire (62) is joined with the end faces (61A, 64A) of the first and fourth light-transmissible resin wires (61, 64).

5. The optical LAN terminal device according to claim 4, **characterized in that** the first to fourth light-transmissible resin wires (61 to 64) comprise four optical fibers (61 to 64) respectively.

6. The optical LAN terminal device according to claim 4, **characterized in that** the first to fourth light-transmissible resin wires (61 to 64) comprise four optical fibers (61 to 64) respectively, and the optical fibers (61 to 64) have respective diameters equal to one another and the end faces (61A, 64A) of the first and fourth fibers (61, 64) are butt-joined with the end faces (62A, 63A) of the second and third fibers (62, 63) while being shifted from the end faces (62A, 63A) of the second and third fibers (63) by a radius.

7. The optical LAN terminal device according to claim 5,
**characterized in that**
the third and fourth light-transmissible resin wires (63, 64) comprise optical fibers (63, 64) respectively,
the first and second light-transmissible resin wires (61, 62) comprise respective optical fibers (61, 62) having larger diameters than the optical fibers (63, 64) of the third and fourth light-transmissible resin wires (63, 64), and
the end faces (61A, 62A) of the optical fibers of the first and second light-transmissible resin wires (61, 62) have a larger joint area than the end faces (61A, 63A) of the optical fibers of the first and third light-transmissible resin wires (61, 63) and the end faces (62A, 64A) of the optical fibers of the second and fourth light-transmissible resin wires (62, 64).

8. The optical LAN terminal device according to any one of claims 1 through 7, **characterized in that** the signal processor (15) generates an optical signal carrying the same information as the optical signal received through the receiving branch (42; 63), delivering the generated signal to the transmission branch (43; 64) at a predetermined timing.

9. The optical LAN terminal device according to any one of claims 1 to 8, further **characterized by** an electrical connector (23) to which an electrical driving member (30, 31) is connectable and in that the signal processor (15) delivers an electrical signal to the electrical connector (23) based on the optical signal, thereby activating or deactivating the electrical driving member (30, 31).

10. The optical LAN terminal device according to any one of claims 1 to 9, further **characterized by** an electrical connector (23) to which a driven member (32, 33) is connectable and in that the signal processor (15) generates and delivers the optical signal based on the electrical signal delivered from the driven member (32, 33) to the electrical connector (23).

11. An optical LAN system which includes a plurality of optical LAN terminal devices (25) according to any one of claim 1 to 10, to which a main control device (26) is connected by an optical fiber (11), being **characterized in that** a plurality of the optical LAN terminal devices (25) are connected by the optical fiber (11) into a loop shape so as to sequentially receive an optical signal delivered by the main control device (26).

12. The optical LAN system according to claims 11, **characterized in that** the main control device (26) determines whether the system is under an abnormal condition, based on whether the main control device (26) has received, through a plurality of the optical LAN terminal devices (25), an optical signal carrying the same contents as the optical signal having been delivered by the main control device (26).
